# EUROPÄISCHE PATENTSCHRIFT

(11) **EP 3 926 175 B1**
(45) Veröffentlichungstag und Bekanntmachung des Hinweises auf die Patenterteilung: **07.08.2024**
(21) Anmeldenummer: 21182960.1
(22) Anmeldetag: 30.06.2021
(51) Int. Cl.: F04D 19/04, F04D 29/059, F04D 29/063, F16C 19/06, F16C 19/16, F16C 33/58, F16C 33/66

(54) **VAKUUMPUMPE MIT WÄLZLAGER**
VACUUM PUMP WITH ROLLER BEARING
POMPE À VIDE DOTÉE D'UN PALIER À ROULEMENT

(43) Veröffentlichungstag der Anmeldung: 22.12.2021
(73) Patentinhaber: Pfeiffer Vacuum Technology AG, 35614 Asslar (DE)
(72) Erfinder: Hofmann, Bernd, 35578 Wetzlar (DE); Koci, Bernd, 35641 Schöffengrund (DE); Mekota, Mirko, 35630 Ehringshausen (DE)
(74) Vertreter: Manitz Finsterwald Patent- und Rechtsanwaltspartnerschaft mbB

(56) Entgegenhaltungen:
- CN-U- 201 539 436
- DE-A1- 102007 014 142
- DE-A1- 102007 019 667
- DE-A1- 102008 036 623
- DE-A1- 102011 109 930
- DE-U1- 212019 000 313
- JP-A- 2005 299 776
- JP-A- 2011 190 859
- JP-A- H06 330 950
- US-A- 2 280 659
- US-A- 5 749 660
- US-A1- 2010 195 946
- US-A1- 2017 227 055
- US-B1- 6 709 236

## Beschreibung

Die Erfindung betrifft eine Vakuumpumpe, insbesondere Turbomolekularvakuumpumpe, mit einem um eine Rotationsachse drehbaren Rotor und mindestens einem mit einem Schmiermittel geschmierten Wälzlager zur Lagerung des Rotors, wobei das Wälzlager einen Außenring und einen Innenring sowie zwischen dem Außenring und dem Innenring gelagerte Wälzkörper, insbesondere Kugeln, umfasst, wobei auf einer Innenseite des Außenrings und einer Außenseite des Innenrings jeweils eine in Umfangsrichtung umlaufende Abwälzfläche für die Wälzkörper ausgebildet ist.

Derartige Vakuumpumpen sind grundsätzlich bekannt, wie zum Beispiel aus der DE 10 2007 019 667 A1, US 6,709,236 B1, CN 201 539 436 U, DE 21 2019 000 313 U1, DE 10 2007 014 142 A1, US 2017/0227055 A1, JP 2005 299776 A oder DE 10 2011 109930 A1.

Grundsätzlich ist es für eine ausreichende Schmierung des Wälzlagers erwünscht, dass das Schmiermittel im Wälzlager verbleibt. Dies wird beispielsweise gemäß der US 2010/0195946 A1 dadurch erreicht, dass ein Innenring eines Wälzlagers mit einer oleophoben Beschichtung derart beschichtet ist, dass die oleophobe Eigenschaft der Beschichtung ausgehend von den axialen äußeren Enden in Richtung der Abwälzflächen graduell abnimmt, wodurch ein Fluss des Schmiermittels in Richtung der Abwälzfläche begünstigt wird. Bei der JP H06 330950 A sind an axialen Enden des Wälzlagers Siegelelemente vorgesehen, die den Verlust eines Abriebs eines Festkörperschmiermittels verhindern, so dass das Festkörperschmiermittel im Wälzlager verbleibt.

Bisweilen werden Vakuumpumpen in der Praxis nicht nur in vertikaler Orientierung, d.h. mit vertikal ausgerichtetem Rotor, sondern bei bestimmten Anwendungen auch in horizontaler Orientierung betrieben. Bei mit einem Schmiermittel wie z.B. Öl geschmierten Wälzlagern kann es dabei zu Ansammlungen von Öl im Wälzlager kommen, wenn das in das Wälzlager geförderte Öl nicht kontinuierlich abfließt. Derartige Ansammlungen von Schmiermittel im Wälzlager erhöhen zumindest kurzzeitig die Leistungsaufnahme des Wälzlagers, was zu einer unerwünschten Erwärmung des Wälzlagers führt. Auch "Überkopf-Einbausituationen" kommen in der Praxis vor, bei denen das Wälzlager gegenüber einer "normalen" Lage um 180° verdreht angeordnet ist.

Es ist bereits bekannt, Wälzlager für Vakuumpumpen an bestimmten Stellen mit Ablaufbohrungen zu versehen, wobei die Ergebnisse aber immer noch unbefriedigend sind. Beispielsweise können Ablaufbohrungen an der am Außenring ausgebildeten Abwälzfläche vorgesehen sein, wie es zum Beispiel die US 5,749,660 A, JP 2011 - 190859 A oder US 2,280,659 A offenbaren.

Es ist eine Aufgabe der Erfindung, bei einer Vakuumpumpe der eingangs genannten Art bei allen in der Praxis vorkommenden Einbausituationen die Abführung des Schmiermittels aus dem Wälzlager zu verbessern.

Diese Aufgabe wird jeweils durch eine Vakuumpumpe mit den Merkmalen eines der unabhängigen Ansprüche gelöst. Bevorzugte Ausführungsformen sind Gegenstand der abhängigen Patentansprüche.

Grundsätzlich kann wie bereits erwähnt vorgesehen sein, dass mindestens ein Durchgang zum Abführen des Schmiermittels vorgesehen ist, welcher sich von der an dem Außenring ausgebildeten Abwälzfläche zur Außenseite des Außenrings erstreckt. Hierdurch kann das Schmiermittel dort abfließen, wo eine Ansammlung des Schmiermittels zu erwarten ist, nämlich an der Abwälzfläche.

In axialer Richtung - bezogen auf die Rotationsachse - ist die Abwälzfläche durch den Bereich definiert, in dem die Wälzkörper angeordnet sind. Je nach konkreter Ausgestaltung der Abwälzfläche können die Wälzkörper die Abwälzfläche flächig oder linienförmig berühren.

Bevorzugt erstreckt sich der Durchgang radial nach außen. Mit anderen Worten ist der Durchgang zumindest annähernd rechtwinklig bezüglich der Rotationsachse ausgerichtet. Der Durchgang kann aber auch unter einem von 90° abweichenden Winkel bezüglich der Rotationsachse ausgerichtet sein. So kann der Durchgang beispielsweise auch schräg zur Rotationsachse verlaufen.

Vorzugsweise ist die Abwälzfläche von einer auf der Innenseite des Außenrings ausgebildeten Ringnut gebildet. Der Querschnitt der Ringnut kann teilkreisförmig sein und den gleichen Radius aufweisen wie z.B. als Wälzkörper vorgesehene Kugeln, die dann flächig in der die Abwälzfläche bildenden Ringnut abrollen. In einer alternativen Ausgestaltung kann der Querschnitt der Ringnut von einer Teilkreisform abweichen und insbesondere derart, beispielsweise parabelförmig, geformt sein, dass die Wälzkörper die Abwälzfläche lediglich linienförmig berühren.

Dabei kann dann insbesondere vorgesehen sein, dass zwischen den Wälzkörpern und einer den Wälzkörpern zugewandten Wandung der Ringnut ein Zwischenraum, bevorzugt ein am Nutboden verlaufender Kanal, vorhanden ist, von dem der Durchgang ausgeht. Beispielsweise weist die Ringnut einen parabolischen Querschnitt auf, um den Zwischenraum zwischen Wälzkörper und Wandung zu bilden. Die Ringnut kann aber auch einen V-förmigen oder U-förmigen Querschnitt aufweisen.

Das Schmiermittel kann sich so am tiefsten Punkt der Ringnut, nämlich in dem Kanal am Nutboden, sammeln und über den von dort ausgehenden Durchgang abfließen. Da die Wälzkörper nicht bis zum Nutboden reichen, stört dort befindliches Schmiermittel die sich abwälzenden Wälzkörper nicht.

Gemäß einer vorteilhaften Ausgestaltung weist der Durchgang entlang seiner Erstreckung einen zumindest annähernd gleichbleibenden Durchmesser auf. Der Durchgang kann also zum Beispiel einfach als zylindrische Bohrung ausgestaltet sein. Alternativ kann der Durchgang sich in Richtung der Außenseite des Außenrings verjüngen oder aufweiten, so dass der Durchgang beispielsweise trichterförmig oder konisch ausgestaltet ist.

Vorzugsweise sind mehrere Durchgänge in Umfangrichtung verteilt, insbesondere gleichmäßig verteilt, angeordnet. Hierdurch ist ein besonders effektives und zuverlässiges, von der Einbaulage der Vakuumpumpe unabhängiges Abführen des Schmiermittels gewährleistet.

Gemäß einem ersten Aspekt der Erfindung ist vorgesehen, dass an der Innenseite des Außenrings auf beiden Seiten der jeweiligen Abwälzfläche eine von der Abwälzfläche weg nach radial außen führende Ablauffläche für das Schmiermittel ausgebildet ist. Durch eine solche, nicht parallel zur Rotationsachse verlaufende Ablauffläche kann auf einfache Weise erreicht werden, dass das Schmiermittel von der Abwälzfläche wegfließen kann. Bei diesem Aspekt der Erfindung ist das Schmiermittel ein Öl.

Gemäß dem ersten Aspekt der Erfindung ist mindestens ein mit der Ablauffläche in Verbindung stehender Ablauf für das Schmiermittel vorgesehen. Dieser kann insbesondere von einem von der Abwälzfläche entfernten Randbereich der Innenseite des Außenrings ausgehen. Das Schmiermittel kann dann über die Ablauffläche von der Abwälzfläche wegflie-βen und über den Ablauf abfließen. Der Ablauf kann sich an ein axiales Ende der Ablauffläche anschließen, aber auch in der Ablauffläche ausgebildet sind.

Vorzugsweise ist der Ablauf als Durchgang ausgebildet, beispielsweise als einfache zylindrische Bohrung, welcher sich von der Innenseite des Außenrings zu dessen Außenseite erstreckt. Es können mehrere derartige Durchgänge in Umfangsrichtung des Wälzlagers verteilt, insbesondere gleichmäßig verteilt, angeordnet sein.

In einer die Rotationsachse enthaltenden Schnittebene kann die Ablauffläche gerade oder gekrümmt verlaufen.

Vorzugsweise ist die Ablauffläche als in Umfangsrichtung des Wälzlagers umlaufende, durchgehende Fläche ausgebildet. Die Ablauffläche definiert dann einen sich in axialer Richtung von der Abwälzfläche weg aufweitenden Konus mit entweder gerade oder gekrümmt verlaufender Innenwand.

Die Ablauffläche muss aber nicht zwingend eine in Umfangsrichtung durchgehende Fläche sein. Es ist auch möglich, eine oder mehrere in Umfangsrichtung verteilte Nuten oder Rinnen auf der z.B. zylindrischen Innenseite des Außenrings und/oder Außenseite des Innenrings auszubilden, wobei diese Nuten oder Rinnen jeweils eine Ablauffläche bilden oder gemeinsam eine nicht zwingend zusammenhängende Ablauffläche bilden und jeweils von der Abwälzfläche weg mit einem grundsätzlich beliebigen, geradlinigen oder gekrümmten Verlauf nach radial außen führen. Das Schmiermittel kann dann über diese Nuten oder Rinnen von der Abwälzfläche wegfließen. Am Ende einer jeden Nut bzw. Rinne kann ein Ablauf z.B. in Form einer Bohrung vorgesehen sein, über den das Schmiermittel dann abflie-βen kann.

Für eine besonders effiziente Abführung des Schmiermittels ist auf beiden Seiten der Abwälzfläche jeweils eine Ablauffläche vorgesehen. Die beiden Ablaufflächen können gleich oder unterschiedlich ausgeführt sein.

Gemäß einem zweiten Aspekt der Erfindung ist vorgesehen, dass ein axialer Abschlussabschnitt des Wälzlagers in Form eines axialen Abschlussflansches des Außenrings mit einer den Wälzkörpern zugewandten Innenseite vorgesehen ist, wobei auf der Innenseite eine Ablauffläche für das Schmiermittel ausgebildet ist, deren axialer Abstand von den Abwälzflächen mit zunehmendem radialen Abstand von der Rotationsachse kontinuierlich zunimmt.

Bei einer Überkopf-Anordnung der Vakuumpumpe, wenn der axiale Abschlussabschnitt sich unten befindet, kann so Schmiermittel von der Rotationsachse weg nach radial außen abfließen.

In einer die Rotationsachse enthaltenden Schnittebene kann die Ablauffläche gerade oder gekrümmt verlaufen. Diese Ablauffläche ist als in Umfangsrichtung des Wälzlagers umlaufende, durchgehende Fläche ausgebildet. Die Ablauffläche definiert dann einen sich in axialer Richtung von der Abwälzfläche weg aufweitenden Konus mit entweder gerade oder gekrümmt verlaufender Innenwand.

Gemäß einer nicht erfindungsgemäßen Ausgestaltung kann die Ablauffläche eine in Umfangsrichtung nicht durchgehende Fläche sein. Es ist auch möglich, eine oder mehrere in Umfangsrichtung verteilte Nuten oder Rinnen auszubilden.

Gemäß einem dritten Aspekt der Erfindung ist vorgesehen, dass mindestens eine der Abwälzflächen eine hydrophile Oberflächenbeschaffenheit und mindestens eine von der Abwälzfläche ausgehende Ablauffläche eine hydrophobe Oberflächenbeschaffenheit aufweist. Bei diesem Aspekt der Erfindung ist das Schmiermittel ein Öl.

Bei der Vakuumpumpe gemäß dem dritten Aspekt ist ferner mindestens ein Durchgang zum Abführen des Schmiermittels vorgesehen, welcher sich von der an dem Außenring ausgebildeten Abwälzfläche zur Außenseite des Außenrings erstreckt.

Es wurde erkannt, dass derartige Beschaffenheiten auch Einfluss auf ein jeweils verwendetes Schmiermittel, insbesondere Öl, haben können, wobei eine hydrophobe Oberfläche ein Abfließen des Schmiermittels und eine hydrophile Oberfläche ein Verteilen des Schmiermittels begünstigen kann.

Die hydrophile Oberflächenbeschaffenheit kann durch eine Oberflächenbeschichtung aus einem hydrophilen Material und/oder durch eine hydrophile Oberflächenstruktur realisiert sein. In entsprechender Weise kann die hydrophobe Oberflächenbeschaffenheit durch eine Oberflächenbeschichtung aus einem hydrophoben Material und/oder durch eine hydrophobe Oberflächenstruktur realisiert sein.

Auf der betreffenden Seite zumindest eines der Ringe kann auch eine Kombination unterschiedlicher Eigenschaften vorgesehen sein. So ist erfindungsgemäß die Abwälzfläche hydrophil, um eine Verteilung des Schmiermittels zu begünstigen und störende Ansammlungen von Schmiermittel zu erschweren, wohingegen eine von der Abwälzfläche ausgehende erfindungsgemäße Ablauffläche, hydrophob ist, um das Abfließen des Schmiermittels zu begünstigen.

Bei dem Schmiermittel für das Wälzlager handelt es sich vorzugsweise um Öl.

Die vorstehend erläuterten Aspekte der Erfindung können miteinander kombiniert werden, wie in den Ansprüchen definiert. Beispielsweise kann also eine erfindungsgemäße Vakuumpumpe einen oder mehrere Durchgänge aufweisen, die sich ausgehend von der Abwälzfläche zur Außenseite des Außenrings erstrecken, wobei auf einer oder auf beiden Seiten der Abwälzfläche eine von der Abwälzfläche weg nach radial außen führende Ablauffläche ausgebildet ist und zumindest ein Bereich an der Innenseite des Außenrings oder an der Außenseite des Innenrings eine hydrophile oder hy drophobe Oberflächenbeschaffenheit aufweist.

Nachfolgend wird die Erfindung rein beispielhaft anhand vorteilhafter Ausführungsformen unter Bezugnahme auf die beigefügte Zeichnung erläutert. Es zeigen:
- Fig. 1: eine perspektivische Ansicht einer Turbomolekularpumpe gemäß dem Stand der Technik,
- Fig. 2: eine Ansicht der Unterseite der Turbomolekularpumpe von Fig. 1,
- Fig. 3: einen Querschnitt der Turbomolekularpumpe längs der in Fig. 2 gezeig-ten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: eine Querschnittansicht eines Wälzlagers einer erfindungsgemäßen Vakuumpumpe,
- Fig. 7: ein Detail der Ansicht von Fig. 6,
- Fig. 8: eine Querschnittansicht eines weiteren Wälzlagers einer erfindungsgemäßen Vakuumpumpe,
- Fig. 9: eine Variante des Wälzlagers von Fig. 8, und
- Fig. 10: eine Querschnittansicht eines weiteren Wälzlagers einer erfindungsgemäßen Vakuumpumpe.

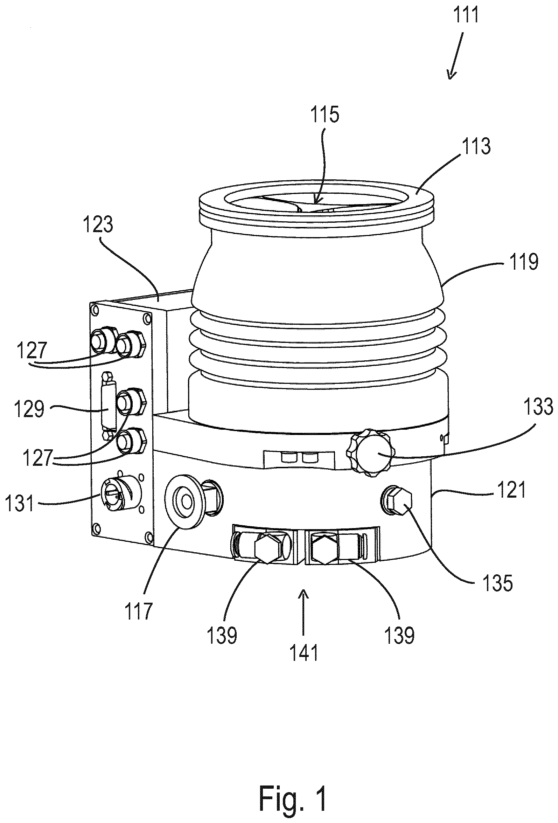

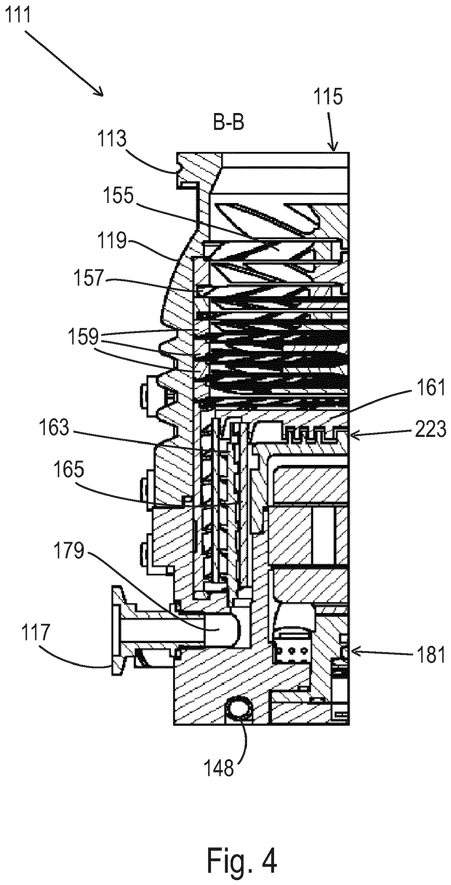

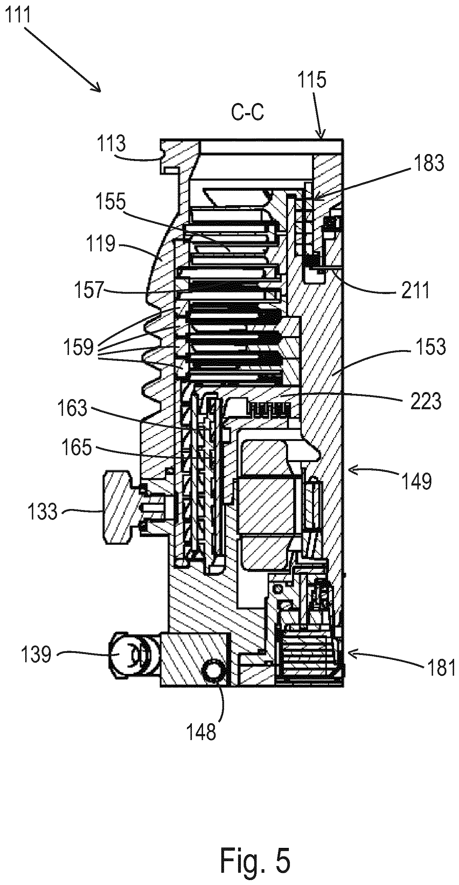

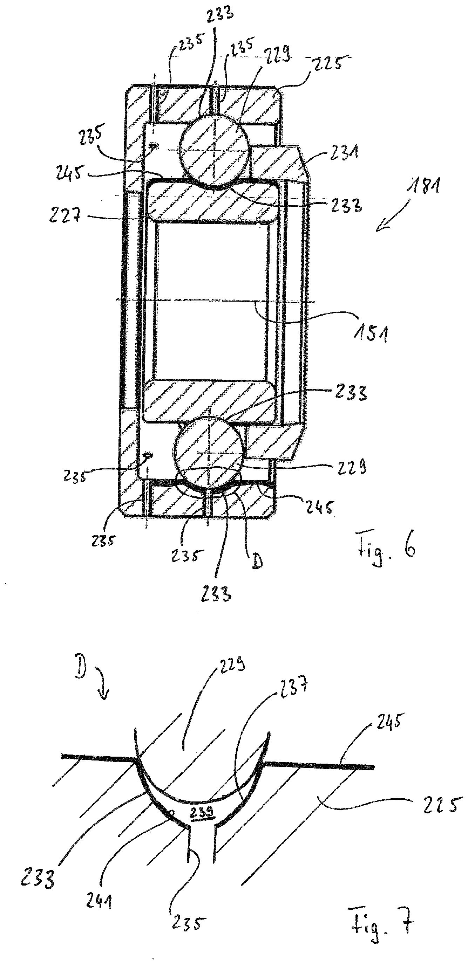

In Fig. 1 bis 5 ist eine bekannte Vakuumpumpe 111 in Form einer Turbomolekularpumpe 111 dargestellt. In Fig. 6, 8 und 9 sind verschiedene Wälzlager 181, welche in der in Fig. 1 bis 5 dargestellten Vakuumpumpe 111 Anwendung finden können. Fig. 7 zeigt ein Detail D des in Fig. 6 dargestellten Wälzlagers 181.

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

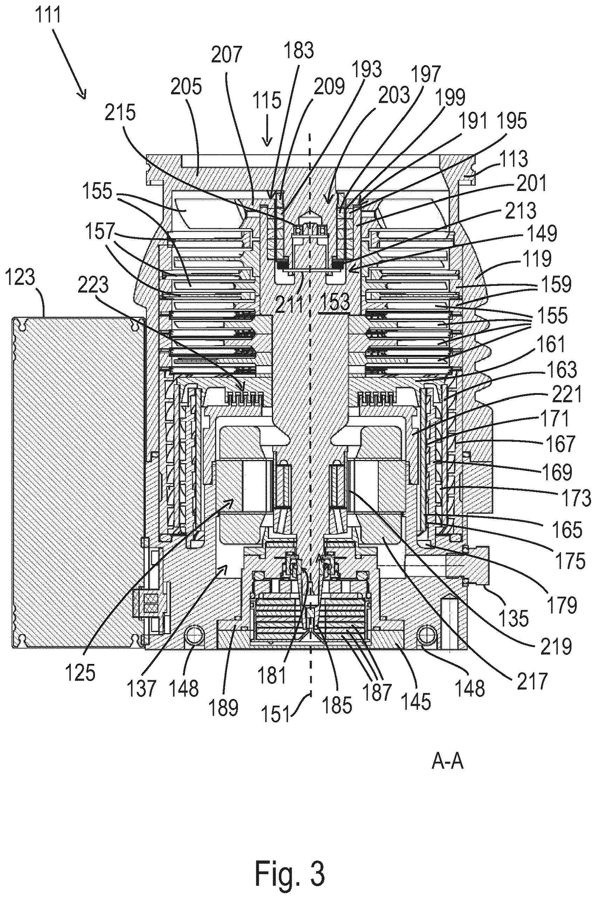

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125 (vgl. auch Fig. 3). Am Elektronikgehäuse 123 sind mehrere Anschlüsse 127 für Zubehör vorgesehen.

Außerdem sind eine Datenschnittstelle 129, z.B. gemäß dem RS485-Standard, und ein Stromversorgungsanschluss 131 am Elektronikgehäuse 123 angeordnet.

Es existieren auch Turbomolekularpumpen, die kein derartiges angebrachtes Elektronikgehäuse aufweisen, sondern an eine externe Antriebselektronik angeschlossen werden.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, eingelassen werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann. Andere existierende Turbomolekularvakuumpumpen (nicht dargestellt) werden ausschließlich mit Luftkühlung betrieben.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann. Grundsätzlich sind dabei beliebige Winkel möglich.

Andere existierende Turbomolekularvakuumpumpen (nicht dargestellt), die insbesondere größer sind als die hier dargestellte Pumpe, können nicht stehend betrieben werden.

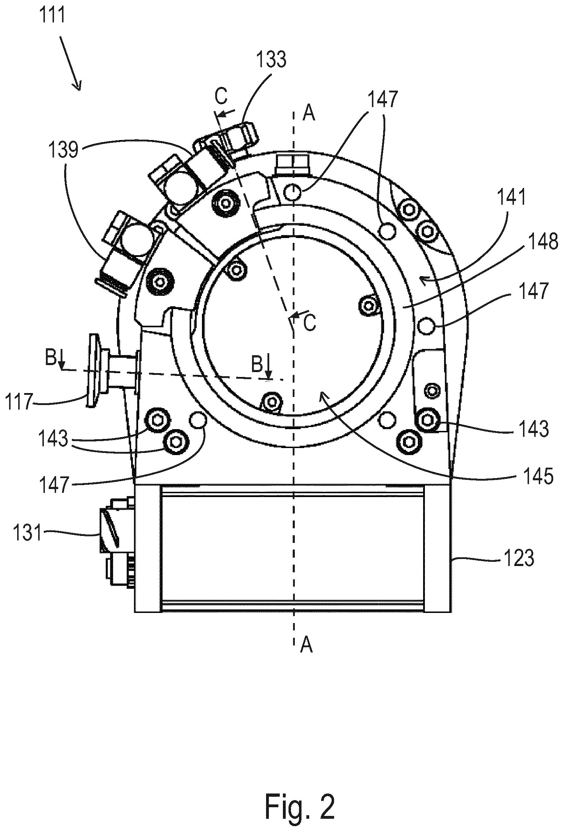

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann. Dies ist bei anderen existierenden Turbomolekularvakuumpumpen (nicht dargestellt), die insbesondere größer sind als die hier dargestellte Pumpe, nicht möglich.

In den Fig. 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Fig. 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Es existieren andere Turbomolekularvakuumpumpen (nicht dargestellt), die keine Holweck-Pumpstufen aufweisen.

Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende HoIweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 167, 169 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Schmiermittel geschmiertes Wälzlager 181 im Bereich des Pumpenauslasses 117 und ein Permanentmagnetlager 183 im Bereich des Pumpeneinlasses 115 vorgesehen. Das Wälzlager 181 kann gemäß der Erfindung ausgebildet sein, was im Zusammenhang mit den Fig. 6 bis 9 nachfolgend noch genauer erläutert wird.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Bei anderen existierenden Turbomolekularvakuumpumpen (nicht dargestellt) kann anstelle einer Spritzmutter eine Spritzschraube vorgesehen sein. Da somit unterschiedliche Ausführungen möglich sind, wird in diesem Zusammenhang auch der Begriff "Spritzspitze" verwendet.

Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Absto-βungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 201 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, damit eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

Verschiedene Ausführungsformen eines Wälzlagers 181 werden nachfolgend erläutert. Die vorstehend in Verbindung mit den Fig. 1 bis 5 beschriebene Vakuumpumpe kann mit einem dieser Wälzlager versehen werden.

Das Wälzlager 181 umfasst einen Außenring 225 und einen Innenring 227 sowie zischen dem Außenring 225 und dem Innenring 227 angeordnete Wälzkörper 229, welche hier als Kugeln ausgestaltet sind. Die Wälzkörper 229 können aber auch z.B. in Form von Walzen vorgesehen sein. Die Wälzkörper 229 sind mittels eines Käfigs 231 in Umfangsrichtung des Wälzlagers 181 zueinander beabstandet. Grundsätzlich kann das Wälzlager 181 aber auch in Form eines vollkugeligen Wälzlagers 181 ohne Käfig ausgestaltet sein.

Auf der Innenseite des Außenrings 225 sowie auf der Außenseite des Innenrings 227 ist jeweils eine umlaufende Abwälzfläche 233 für die Wälzkörper 229 ausgebildet. Die Abwälzfläche 233 definiert somit jeweils denjenigen axialen Bereich des jeweiligen Rings 225, 227, in dem sich die Wälzkörper 229 abwälzen.

Während des Betriebs der Vakuumpumpe wird dem Wälzlager 181 ein Schmiermittel z.B. in Form von Öl zugeführt. Dies ist grundsätzlich bekannt, so dass hierauf nicht näher eingegangen zu werden braucht. Bei horizontaler Einbaulage, also bei - wie gezeigt - horizontal verlaufender Rotationsachse 151 neigt das Schmiermittel dazu, sich am tiefsten Punkt einer hier die Abwälzfläche 233 bildenden Ringnut 241 (vgl. Fig. 7) zu sammeln.

Das in Fig. 6 gezeigte Wälzlager 181 weist zwei Arten von hier jeweils als zylindrische Bohrungen ausgebildeten Durchgängen 235 auf, welche sich von der Innenseite des Außenrings 225 zu dessen Außenseite erstrecken und welche zur Abführung des Schmiermittels aus dem Wälzlager 181 dienen. Die Durchgänge 235 sind jeweils in Umfangsrichtung des Wälzlagers 181 gleichmäßig verteilt angeordnet und erstrecken sich jeweils in radialer Richtung.

Ein aus dem Stand der Technik bereits bekannter erster Satz von Durchgängen 235 ist in Bezug auf die Abwälzfläche 233 axial versetzt angeordnet, d.h. diese bekannten Durchgänge 235 befinden sich in unmittelbarer Nähe zum axialen Anlageflansch des Wälzlagers 181. Dieser erste Satz von Durchgängen 235 kann zusätzlich zu den nachstehend erläuterten Durchgängen 235 vorgesehen sein, aber in einer alternativen Ausführungsform auch weggelassen werden.

Ein zweiter Satz von Durchgängen 235 erstreckt sich erfindungsgemäß in dem Außenring 225 ausgehend von der Abwälzfläche 233 zur Außenseite des Außenrings 225. Das Schmiermittel kann also direkt von der Abwälzfläche 233 abfließen und muss nicht in axialer Richtung weg zu den bekannten Durchgängen am Anlageflansch fließen.

Wie das Detail D in Fig. 7 zeigt, gehen diese Durchgänge 235 vom tiefsten Punkt, also vom Nutboden, der erwähnten, die Abwälzfläche 233 bildenden Ringnut 241 aus, auf deren Wandung 237 die Wälzkörper 229 abrollen. Aufgrund des - wie auch im Einleitungsteil erläutert - von der Kreisform der Kugeln 229 abweichenden Querschnitts der Ringnut 241 ist zwischen den Kugeln 229 und dem Nutboden ein Zwischenraum in Form eines umlaufenden Kanals 239 vorhanden, in dem sich das Schmiermittel sammeln und von dem aus es über die Durchgänge 235 abfließen kann.

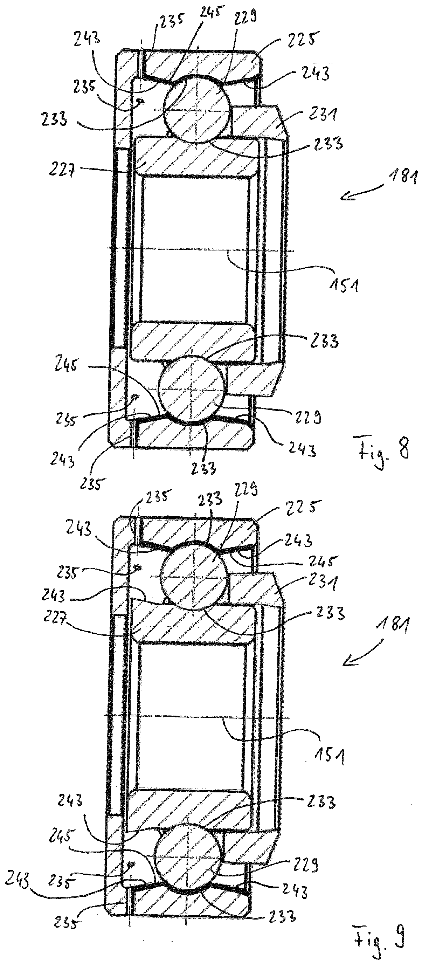

In Fig. 8 ist eine alternative Ausgestaltung eines Wälzlagers 181 dargestellt. Der erste Satz von Durchgängen 235 (vgl. Fig. 6) ist auch hier vorgesehen, wobei die von der Abwälzfläche 233 ausgehenden Durchgänge allerdings nicht vorhanden sind, in einer Abwandlung der in Fig. 8 dargestellten Ausführungsform gleichwohl zusätzlich vorgesehen sein können.

Das in Fig. 8 dargestellte Wälzlager 181 weist an der Innenseite des Außenrings 225 auf beiden Seiten der Abwälzfläche 233 jeweils eine von der Abwälzfläche 233 weg nach radial außen führende Ablauffläche 243 für das Schmiermittel auf. In dem dargestellten Ausführungsbeispiel weist die Ablauffläche 243 einen geraden Verlauf auf, ist also als eine Schräge ausgeführt. Die Ablauffläche 243 kann in einer alternativen Ausgestaltung aber auch gekrümmt sein.

Die Ablauffläche 243 endet an ihrem von der Abwälzfläche 233 entfernten axialen Ende an einem Ablauf, der von den erwähnten Durchgängen 235 gebildet ist, so dass über die Ablaufschräge 243 ablaufendes Schmiermittel hier abfließen kann.

Fig. 9 zeigt eine Weiterbildung des in Fig. 8 dargestellten Wälzlagers 181. Hier ist zusätzlich auch an der Außenseite des Innenrings 227 auf der in Fig. 9 linken Seite der Abwälzfläche 233 eine von der Abwälzfläche 233 weg nach radial außen führende Ablauffläche 243 für das Schmiermittel ausgebildet ist. Bei einem Wälzlager ohne Käfig kann zusätzlich auch auf der anderen Seite eine Ablauffläche vorgesehen sein.

Die beiden Ablaufflächen 243 des Innenrings 227 und Außenrings 225 können - wie Fig. 9 zeigt - zumindest annähernd parallel zueinander ausgerichtet, in alternativen Ausgestaltungen aber auch unter unterschiedlichen Winkeln bezüglich der Rotationsachs 151 geneigt sein.

Beide Ablaufflächen 243 sind jeweils als in Umfangsrichtung des Wälzlagers 181 umlaufende, durchgehende Flächen ausgebildet und definieren somit jeweils einen sich in axialer Richtung von der Abwälzfläche 233 weg aufweitenden Konus mit hier gerader, d.h. nicht gekrümmter, Innenwand.

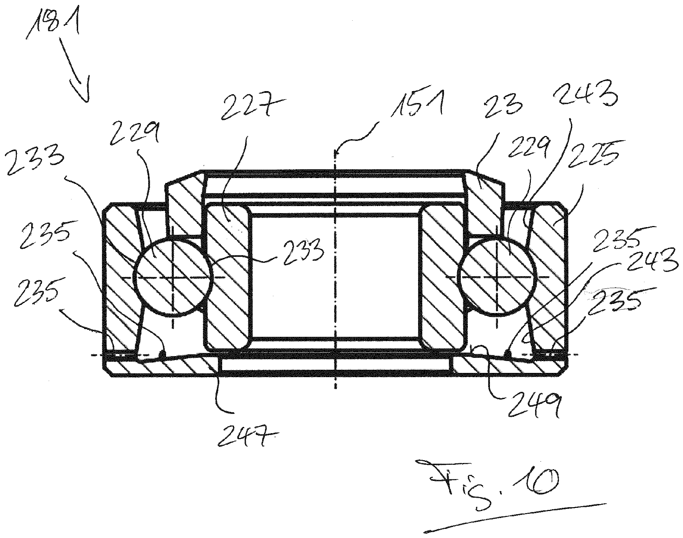

Bei dem Wälzlager 181 gemäß Fig. 10 ist ein axialer Abschlussabschnitt 247 in Form eines axialen Abschlussflansches des Außenrings 225 auf seiner Innenseite mit einer Ablauffläche 249 versehen, deren axialer Abstand von den Abwälzflächen 233 mit zunehmendem radialem Abstand von der Rotationsachse 151 zunimmt. Die Ablauffläche 249 ist eine durchgehende Fläche, die um die Rotationsachse 151 herum verläuft und dabei einen spitzen Winkel mit einer Ebene einschließt, die vertikal zur Rotationsachse 151 verläuft.

Bei einer Überkopf-Anordnung der Vakuumpumpe, wenn der axiale Abschlussabschnitt 247 sich wie in Fig. 10 dargestellt unten befindet, kann so das Schmiermittel von der Rotationsachse 151 weg nach radial außen und zu den Bohrungen 235 fließen.

Gemäß einem weiteren Aspekt der Erfindung, welcher sowohl bei dem in Fig. 6 als auch bei den in Fig. 8, 9 oder 10 dargestellten Wälzlagern 181 realisiert ist, kann zumindest eine der Seiten eines jeweiligen Rings 225, 227 eine hydrophile oder hydrophobe Oberflächenbeschaffenheit aufweisen. Hierzu ist jeweils eine entsprechende Oberflächenbeschichtung 245 vorgesehen, die durch eine dickere Linie veranschaulicht ist. Überdies können auch die Durchgänge 235 eine hydrophile oder hydrophobe Oberflächenbeschaffenheit aufweisen.

Wie im Einleitungsteil erwähnt, kann anstelle der Beschichtung 245 auch eine Struktur vorgesehen sein, mit welcher der entsprechende Oberflächenbereich versehen ist und welcher diesem die jeweils gewünschte Beschaffenheit verleiht.

### Bezugszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not- bzw. Fanglager
- 217: Motorstator
- 219: Zwischenraum
- 221: Wandung
- 223: Labyrinthdichtung
- 225: Außenring
- 227: Innenring
- 229: Wälzkörper
- 231: Käfig
- 233: Abwälzfläche
- 235: Durchgang
- 237: Wandung
- 239: Zwischenraum
- 241: Ringnut
- 243: Ablauffläche
- 245: Oberflächenbeschichtung
- 247: axialer Abschlussabschnitt, Flansch des Außenrings
- 249: Ablauffläche

- D: Detail

## Patentansprüche

1. Vakuumpumpe (111), insbesondere Turbomolekularvakuumpumpe (111), mit einem um eine Rotationsachse (151) drehbaren Rotor (149) und mindestens einem mit einem Öl als Schmiermittel geschmierten Wälzlager (181) zur Lagerung des Rotors (149), wobei das Wälzlager (181) einen Au-βenring (225) und einen Innenring (227) sowie zwischen dem Außenring (225) und dem Innenring (227) gelagerte Wälzkörper (229), insbesondere Kugeln, umfasst, wobei auf einer Innenseite des Außenrings (225) und einer Außenseite des Innenrings (227) jeweils eine in Umfangsrichtung umlaufende Abwälzfläche (233) für die Wälzkörper (229) ausgebildet ist, **dadurch gekennzeichnet, dass** an der Innenseite des Außenrings (225) auf beiden Seiten der Abwälzfläche (233) eine von der Abwälzfläche (233) weg nach radial außen führende Ablauffläche (243) für das Schmiermittel ausgebildet ist, und dass mindestens ein mit der Ablauffläche (243) in Verbindung stehender Ablauf (235) für das Schmiermittel vorgesehen ist, insbesondere wobei der Ablauf (235) von einem von der Abwälzfläche (233) entfernten Randbereich der Innenseite des Außenrings (225) ausgeht.

2. Vakuumpumpe (111) nach Anspruch 1,
wobei die Ablauffläche (243) in einer die Rotationsachse (151) enthaltenden Schnittebene gerade oder gekrümmt, insbesondere konkav oder konvex gekrümmt, verläuft, insbesondere wobei die Ablauffläche (243) gerade und unter einem spitzen Winkel zur Rotationsachse (151) verläuft.

3. Vakuumpumpe (111) nach Anspruch 1 oder 2,
wobei der Ablauf als Durchgang (235) ausgebildet ist, welcher sich von der Innenseite des Außenrings (225) zu dessen Außenseite erstreckt.

4. Vakuumpumpe (111) nach Anspruch 3,
wobei mehrere jeweils mit der Ablauffläche (243) verbundene, als Ablauf dienende Durchgänge (235) in Umfangrichtung des Wälzlagers (181) verteilt, insbesondere gleichmäßig verteilt, angeordnet sind.

5. Vakuumpumpe (111) nach zumindest einem der vorstehenden Ansprüche, wobei die Ablauffläche (243) in Umfangsrichtung des Wälzlagers (181) umläuft.

6. Vakuumpumpe (111), insbesondere Turbomolekularvakuumpumpe (111), insbesondere mit den Merkmalen zumindest eines der vorstehenden Ansprüche, mit einem um eine Rotationsachse (151) drehbaren Rotor (149) und mindestens einem mit einem Schmiermittel geschmierten Wälzlager (181) zur Lagerung des Rotors (149), wobei das Wälzlager (181) einen Au-βenring (225) und einen Innenring (227) sowie zwischen dem Außenring (225) und dem Innenring (227) gelagerte Wälzkörper (229), insbesondere Kugeln, umfasst, **dadurch gekennzeichnet, dass** ein axialer Abschlussabschnitt (247) des Wälzlagers (181) in Form eines axialen Abschlussflansches des Außenrings (225) mit einer den Wälzkörpern (229) zugewandten Innenseite vorgesehen ist, dass auf der Innenseite eine durchgehende Ablauffläche (249) für das Schmiermittel ausgebildet ist, die um die Rotationsachse (151) herum verläuft und deren axialer Abstand von Abwälzflächen (233) für die Wälzkörper (229) mit zunehmendem radialen Abstand von der Rotationsachse (151) kontinuierlich zunimmt, dass die Ablauffläche (249) einen spitzen Winkel mit einer Ebene einschließt, die vertikal zur Rotationsachse (151) verläuft, und dass mehrere mit der Ablauffläche (249) verbundene Durchgänge (235) für das Schmiermittel vorgesehen sind, welche in Bezug auf die äußere Abwälzfläche (233) axial versetzt angeordnet sind und welche sich von der Innenseite des Außenrings (225) zu dessen Außenseite erstrecken.

7. Vakuumpumpe (111) nach zumindest einem der vorstehenden Ansprüche, wobei mindestens ein Durchgang (235) zum Abführen des Schmiermittels vorgesehen ist, welcher sich von der an dem Außenring (225) ausgebildeten Abwälzfläche (233) zur Außenseite des Außenrings (225) erstreckt.

8. Vakuumpumpe (111), insbesondere Turbomolekularvakuumpumpe (111), insbesondere mit den Merkmalen zumindest eines der vorstehenden Ansprüche, mit einem um eine Rotationsachse (151) drehbaren Rotor (149) und mindestens einem mit einem Öl als Schmiermittel geschmierten Wälzlager (181) zur Lagerung des Rotors (149), wobei das Wälzlager (181) einen Außenring (225) und einen Innenring (227) sowie zwischen dem Au-βenring (225) und dem Innenring (227) gelagerte Wälzkörper (229), insbesondere Kugeln, umfasst, wobei auf einer Innenseite des Außenrings (225) und einer Außenseite des Innenrings (227) jeweils eine in Umfangsrichtung umlaufende Abwälzfläche (233) für die Wälzkörper (229) ausgebildet ist, **dadurch gekennzeichnet, dass** mindestens eine der Abwälzflächen (233) eine hydrophile Oberflächenbeschaffenheit und mindestens eine von der Abwälzfläche (233) mit hydrophiler Oberflächenbeschaffenheit ausgehende Ablauffläche (243) eine hydrophobe Oberflächenbeschaffenheit aufweist, und dass mindestens ein Durchgang (235) zum Abführen des Schmiermittels vorgesehen ist, welcher sich von der an dem Außenring (225) ausgebildeten Abwälzfläche (233) zur Außenseite des Außenrings (225) erstreckt.

9. Vakuumpumpe (111) nach Anspruch 7 oder 8, wobei sich der Durchgang (235) radial nach außen erstreckt.

10. Vakuumpumpe (111) nach zumindest einem der Ansprüche 7 bis 9, wobei die Abwälzfläche (233) von einer auf der Innenseite des Außenrings (225) ausgebildeten Ringnut (241) gebildet ist, insbesondere wobei zwischen den Wälzkörpern (229) und einer den Wälzkörpern (229) zugewandten Wandung (237) der Ringnut (241) ein Zwischenraum (239), bevorzugt ein am Nutboden verlaufender Kanal, vorhanden ist, von dem der Durchgang (235) ausgeht.

11. Vakuumpumpe (111) nach zumindest einem der Ansprüche 7 bis 10, wobei der Durchgang (235) entlang seiner Erstreckung einen zumindest annähernd gleichbleibenden Durchmesser aufweist oder sich in Richtung der Außenseite des Außenrings (225) verjüngt oder aufweitet.

12. Vakuumpumpe (111) nach zumindest einem der Ansprüche 7 bis 11, wobei mehrere Durchgänge (235) in Umfangrichtung des Wälzlagers verteilt, insbesondere gleichmäßig verteilt, angeordnet sind.

13. Vakuumpumpe (111) nach zumindest einem der Ansprüche 8 bis 12, wobei die hydrophile Oberflächenbeschaffenheit durch eine Oberflächenbeschichtung (245) aus einem hydrophilen Material und/oder durch eine hydrophile Oberflächenstruktur und/oder wobei die hydrophobe Oberflächenbeschaffenheit durch eine Oberflächenbeschichtung (245) aus einem hydrophoben Material und/oder durch eine hydrophobe Oberflächenstruktur realisiert sind bzw. ist.

## Claims

1. A vacuum pump (111), in particular a turbomolecular vacuum pump (111), comprising a rotor (149) rotatable about an axis of rotation (151) and at least one rolling element bearing (181) lubricated with an oil as lubricant for supporting the rotor (149), wherein the rolling element bearing (181) comprises an outer ring (225) and an inner ring (227) as well as rolling elements (229), in particular balls, supported between the outer ring (225) and the inner ring (227), wherein a respective roll-off surface (233), running around in the peripheral direction, for the rolling elements (229) is formed at an inner side of the outer ring (225) and an outer side of the inner ring (227),
**characterized in that**
a run-off surface (243), leading radially outwardly away from the roll-off surface (233), for the lubricant is formed at the inner side of the outer ring (225) at both sides of the roll-off surface (233), and **in that** at least one outlet (235) for the lubricant that is connected to the run-off surface (243) is provided, in particular with the outlet (235) starting from a marginal region of the inner side of the outer ring (225) that is remote from the roll-off surface (233).

2. A vacuum pump (111) according to claim 1,
wherein the run-off surface (243) extends in a straight or curved manner, in particular in a concavely or convexly curved manner, in a sectional plane including the axis of rotation (151), in particular wherein the run-off surface (243) extends in a straight manner and at an acute angle to the axis of rotation (151).

3. A vacuum pump (111) according to claim 1 or 2,
wherein the outlet is configured as a passage (235) which extends from the inner side of the outer ring (225) to its outer side.

4. A vacuum pump (111) according to claim 3,
wherein a plurality of passages (235), which are each connected to the run-off surface (243) and which serve as an outlet, are arranged distributed, in particular uniformly distributed, in the peripheral direction of the rolling element bearing (181).

5. A vacuum pump (111) according to at least one of the preceding claims, wherein the run-off surface (243) runs around in the peripheral direction of the rolling element bearing (181).

6. A vacuum pump (111), in particular a turbomolecular vacuum pump (111), in particular having the features of at least one of the preceding claims, comprising a rotor (149) rotatable about an axis of rotation (151) and at least one rolling element bearing (181) lubricated with a lubricant for supporting the rotor (149), wherein the rolling element bearing (181) comprises an outer ring (225) and an inner ring (227) as well as rolling elements (229), in particular balls, supported between the outer ring (225) and the inner ring (227),
**characterized in that**
an axial end section (247) of the rolling element bearing (181) is provided in the form of an axial end flange of the outer ring (225) having an inner side facing the rolling elements (229), **in that** a continuous run-off surface (249) for the lubricant is formed at the inner side, which run-off surface (249) extends around the axis of rotation (151) and whose axial spacing from roll-off surfaces (233) for the rolling elements (229) increases continuously as the radial spacing from the axis of rotation (151) increases, **in that** the run-off surface (249) includes an acute angle with a plane which extends vertically to the axis of rotation (151), and **in that** a plurality of passages (235) for the lubricant are provided which are connected to the run-off surface (249), which are arranged axially offset with respect to the outer roll-off surface (233) and which extend from the inner side of the outer ring (225) to its outer side.

7. A vacuum pump (111) according to at least one of the preceding claims, wherein at least one passage (235) for leading off the lubricant is provided and extends from the roll-off surface (233) formed at the outer ring (225) to the outer side of the outer ring (225).

8. A vacuum pump (111), in particular a turbomolecular vacuum pump (111), in particular having the features of at least one of the preceding claims, comprising a rotor (149) rotatable about an axis of rotation (151) and at least one rolling element bearing (181) lubricated with an oil as lubricant for supporting the rotor (149), wherein the rolling element bearing (181) comprises an outer ring (225) and an inner ring (227) as well as rolling elements (229), in particular balls, supported between the outer ring (225) and the inner ring (227), wherein a respective roll-off surface (233), running around in the peripheral direction, for the rolling elements (229) is formed at an inner side of the outer ring (225) and an outer side of the inner ring (227),
**characterized in that**
at least one of the roll-off surfaces (233) has a hydrophilic surface property and at least one run-off surface (243), starting from the roll-off surface (233) having a hydrophilic surface property, has a hydrophobic surface property, and
**in that** at least one passage (235) for leading off the lubricant is provided and extends from the roll-off surface (233) formed at the outer ring (225) to the outer side of the outer ring (225).

9. A vacuum pump (111) according to claim 7 or 8,
wherein the passage (235) extends radially outwardly.

10. A vacuum pump (111) according to at least one of the claims 7 to 9, wherein the roll-off surface (233) is formed by an annular groove (241) formed at the inner side of the outer ring (225), in particular wherein an intermediate space (239), preferably a channel extending along the groove base, from which the passage (235) starts, is present between the rolling elements (229) and a wall (237) of the annular groove (241) facing the rolling elements (229).

11. A vacuum pump (111) according to at least one of the claims 7 to 10, wherein the passage (235) has an at least approximately uniform diameter along its extent or tapers or widens in the direction of the outer side of the outer ring (225).

12. A vacuum pump (111) according to at least one of the claims 7 to 11, wherein a plurality of passages (235) are arranged distributed, in particular uniformly distributed, in the peripheral direction of the rolling element bearing.

13. A vacuum pump (111) according to at least one of the claims 8 to 12, wherein the hydrophilic surface property is realized by a surface coating (245) composed of a hydrophilic material and/or by a hydrophilic surface structure and/or wherein the hydrophobic surface property is realized by a surface coating (245) composed of a hydrophobic material and/or by a hydrophobic surface structure.

## Revendications

1. Pompe à vide (111), en particulier pompe à vide turbomoléculaire (111), comprenant un rotor (149), susceptible de tourner autour d'un axe de rotation (151), et au moins un palier à roulement (181) lubrifié par une huile à titre de lubrifiant et destiné au montage du rotor (149),
dans laquelle
le palier à roulement (181) comprend une bague extérieure (225) et une bague intérieure (227) ainsi que des corps de roulement (229), en particulier des billes, montés entre la bague extérieure (225) et la bague intérieure (227),
une surface de roulement respective (233) pour les corps de roulement (229), laquelle s'étend dans la direction circonférentielle, est réalisée sur une face intérieure de la bague extérieure (225) et sur une face extérieure de la bague intérieure (227),
**caractérisée en ce que**
une surface d'écoulement (243) pour le lubrifiant, qui mène radialement vers l'extérieur en partant de la surface de roulement (233), est réalisée sur la face intérieure de la bague extérieure (225), des deux côtés de la surface de roulement (233), et
**en ce qu'**il est prévu au moins une évacuation (235) pour le lubrifiant, qui est en liaison avec la surface d'écoulement (243), en particulier l'évacuation (235) partant d'une zone de bord, éloignée de la surface de roulement (233), de la face intérieure de la bague extérieure (225).

2. Pompe à vide (111) selon la revendication 1,
dans laquelle la surface d'écoulement (243) s'étend de manière droite ou incurvée, en particulier de manière incurvée concave ou convexe, dans un plan de coupe contenant l'axe de rotation (151),
en particulier, la surface d'écoulement (243) s'étend de manière droite et selon un angle aigu par rapport à l'axe de rotation (151).

3. Pompe à vide (111) selon la revendication 1 ou 2,
dans laquelle l'évacuation se présente sous la forme d'un passage (235) qui s'étend depuis la face intérieure de la bague extérieure (225) vers sa face extérieure.

4. Pompe à vide (111) selon la revendication 3,
dans laquelle plusieurs passages (235) servant d'évacuation et reliés chacun à la surface d'écoulement (243) sont répartis dans la direction circonférentielle du palier à roulement (181), en particulier répartis de manière uniforme.

5. Pompe à vide (111) selon l'une au moins des revendications précédentes, dans laquelle la surface d'écoulement (243) s'étend dans la direction circonférentielle du palier à roulement (181).

6. Pompe à vide (111), en particulier pompe à vide turbomoléculaire (111), présentant en particulier les éléments de l'une au moins des revendications précédentes, comprenant un rotor (149), susceptible de tourner autour d'un axe de rotation (151), et au moins un palier à roulement (181) lubrifié par un lubrifiant et destiné au montage du rotor (149), le palier à roulement (181) comprenant une bague extérieure (225) et une bague intérieure (227) ainsi que des corps de roulement (229), en particulier des billes, montés entre la bague extérieure (225) et la bague intérieure (227),
**caractérisée en ce que**
il est prévu une portion de fermeture axiale (247) du palier à roulement (181), réalisée sous la forme d'une bride de fermeture axiale de la bague extérieure (225) et ayant une face intérieure tournée vers les corps de roulement (229),
**en ce qu'**une surface d'écoulement continue (249) pour le lubrifiant est réalisée sur la face intérieure, qui s'étend autour de l'axe de rotation (151) et dont la distance axiale par rapport aux surfaces de roulement (233) pour les corps de roulement (229) augmente en continu au fur et à mesure de l'augmentation de la distance radiale par rapport à l'axe de rotation (151),
**en ce que** la surface d'écoulement (249) forme un angle aigu avec un plan qui est vertical par rapport à l'axe de rotation (151),
et **en ce qu'**il est prévu plusieurs passages (235) pour le lubrifiant qui sont reliés à la surface d'écoulement (249), qui sont décalés axialement par rapport à la surface de roulement extérieure (233) et qui s'étendent depuis la face intérieure de la bague extérieure (225) vers sa face extérieure.

7. Pompe à vide (111) selon l'une au moins des revendications précédentes, dans laquelle est prévu au moins un passage (235) pour l'évacuation du lubrifiant, qui s'étend depuis la surface de roulement (233) réalisée sur la bague extérieure (225) vers la face extérieure de la bague extérieure (225).

8. Pompe à vide (111), en particulier pompe à vide turbomoléculaire (111), présentant en particulier les éléments de l'une au moins des revendications précédentes, comprenant un rotor (149), susceptible de tourner autour d'un axe de rotation (151), et au moins un palier à roulement (181) lubrifié par une huile à titre de lubrifiant et destiné au montage du rotor (149),
dans laquelle
le palier à roulement (181) comprend une bague extérieure (225) et une bague intérieure (227) ainsi que des corps de roulement (229), en particulier des billes, montés entre la bague extérieure (225) et la bague intérieure (227),
une surface de roulement respective (233) pour les corps de roulement (229), laquelle s'étend dans la direction circonférentielle, est réalisée sur une face intérieure de la bague extérieure (225) et sur une face extérieure de la bague intérieure (227),
**caractérisée en ce que**
l'une au moins des surfaces de roulement (233) présente un état de surface hydrophile, et au moins une surface d'écoulement (243) partant de la surface de roulement (233) à état de surface hydrophile présente un état de surface hydrophobe, et
**en ce qu'**il est prévu au moins un passage (235) pour l'évacuation du lubrifiant, qui s'étend depuis la surface de roulement (233) réalisée sur la bague extérieure (225) vers la face extérieure de la bague extérieure (225).

9. Pompe à vide (111) selon la revendication 7 ou 8,
dans laquelle le passage (235) s'étend radialement vers l'extérieur.

10. Pompe à vide (111) selon l'une au moins des revendications 7 à 9, dans laquelle la surface de roulement (233) est formée par une rainure annulaire (241) réalisée sur la face intérieure de la bague extérieure (225), en particulier un espace intermédiaire (239), de préférence un canal s'étendant au fond de la rainure, se présente entre les corps de roulement (229) et une paroi (237) de la rainure annulaire (241) tournée vers les corps de roulement (229), espace depuis lequel part le passage (235).

11. Pompe à vide (111) selon l'une au moins des revendications 7 à 10, dans laquelle le passage (235) présente un diamètre, au moins approximativement constant le long de son extension, ou se rétrécit ou s'élargit en direction de la face extérieure de la bague extérieure (225).

12. Pompe à vide (111) selon l'une au moins des revendications 7 à 11, dans laquelle plusieurs passages (235) sont répartis dans la direction circonférentielle du palier à roulement, en particulier répartis de manière uniforme.

13. Pompe à vide (111) selon l'une au moins des revendications 8 à 12, dans laquelle l'état de surface hydrophile est réalisé par un revêtement de surface (245) en un matériau hydrophile et/ou par une structure de surface hydrophile, et/ou l'état de surface hydrophobe est réalisé par un revêtement de surface (245) en un matériau hydrophobe et/ou par une structure de surface hydrophobe.
